# EUROPÄISCHE PATENTANMELDUNG

(11) **EP 3 023 695 A1**
(43) Veröffentlichungstag der Anmeldung: **25.05.2016**
(21) Anmeldenummer: 14193991.8
(22) Anmeldetag: 20.11.2014
(51) Int. Cl.: F23R 3/04, F04D 29/54, F01D 9/02, F02C 3/14

(54) **Thermische Energiemaschine**

(71) Anmelder: Siemens Aktiengesellschaft, 80333 München (DE)
(72) Erfinder: Fuchs, Florian, 12059 Berlin (DE); Hecklau, Martin, 10829 Berlin (DE); Herzog, Nils, 10717 Berlin (DE); Mavrommatis, Philippos Theodoros, 12045 Berlin (DE); Mutke, Stefan, 10961 Berlin (DE); Mühl, Julia, 10439 Berlin (DE); Pruss, Matthias, 10318 Berlin-Lichtenberg (DE); Reckert, Rafael, 13127 Berlin (DE); Speiser, Julian, 12435 Berlin (DE); Wohltat, Rene, 14542 Werder (DE)

(57) **Zusammenfassung**

Die Erfindung betrifft eine thermische Energiemaschine (1), insbesondere eine Gasturbine (2), mit einem Verdichter (3) zum Verdichten eines entlang der Maschinenlängsmittelmittelachse (6) in axialer Strömungsrichtung (4) strömenden Luftmassenstroms (5), mit einem diesem Verdichter (3) axial nachgeschalteten Diffusor (7) und mit zwei sich gegenüberliegenden, radial weiter außen angeordneten Silo-Brennkammern, in welche hinein der aus dem Diffusor (7) austretende Luftmassenstrom (5) mittels eines durch Gehäuseteile (10) der thermischen Energiemaschine (1) entsprechend ausgestalteten Diffusoraustrittsbereichs (9) abströmen kann, und bei welcher der Diffusoraustrittsbereich (9) radial in zu den Silo-Brennkammern führenden Zuströmkanäle (15, 16) hinein mündet, wobei der Diffusoraustrittsbereich (9) derart ausgestaltet ist, dass der aus dem Diffusor (7) austretende Luftmassenstrom (5) unsymmetrisch abströmt, um den Zuströmkanälen (15, 16) der Silo-Brennkammern homogener zugeleitet zu werden.

## Beschreibung

Die Erfindung betrifft eine thermische Energiemaschine, insbesondere eine Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern, in welche hinein der aus dem Diffusor austretende Luftmassenstrom mittels eines durch Gehäuseteile der thermischen Energiemaschine entsprechend ausgestalteten Diffusoraustrittsbereichs abströmen kann, und bei welcher der Diffusoraustrittsbereich radial in zu den Silo-Brennkammern führenden Zuströmkanäle hinein mündet.

Gattungsgemäße thermische Energiemaschinen sind etwa als Turbinen aus dem Stand der Technik allgemein bekannt, wobei ein in axialer Strömungsrichtung stromab hinter einem Verdichter bzw. einem Verdichteraustritt platzierter Diffusor insbesondere der Verzögerung und der Druckerhöhung eines Luftmassenstroms einerseits und einer möglichst homogenen Einströmung in ein durch ein Innengehäuse, ein Mittelgehäuse, einen Silo-Brennkammereintritt- bzw. einen Silo-Brennkammerzuführbereich und einen Diffusoraustritt gebildetes Plenum andererseits dient. Hierbei ist ein Diffusoraustrittsbereich bisher derart ausgestaltet, dass der von dem Diffusor kommende Luftmassenstrom radialsymmetrisch gleichmäßig abströmt und dieser Luftmassenstrom dann weiter in Zuströmkanäle von radial angeflanschten Silo-Brennkammereinrichtungen geleitet wird. Nachteilig hierbei ist es jedoch, dass Teile des Luftmassenstroms, welche im Wesentlichen nicht gleichgerichtet mit der Strömungsrichtung der Zuströmkanäle abströmen, das insgesamte Strömungsverhalten des Luftmassenstroms nachteilig beeinflussen können, wodurch oftmals eine nur bedingt homogene EinStrömung insbesondere in die Zuströmkanäle erreicht wird und die Turbine somit insgesamt uneffektiver arbeitet.

Es ist Aufgabe der Erfindung, gattungsgemäße thermische Energiemaschinen weiterzuentwickeln, um zumindest die vorstehend genannten Nachteile zu überwinden.

Die Aufgabe wird von einer thermischen Energiemaschine, insbesondere von einer Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern gelöst, in welche hinein der aus dem Diffusor austretende Luftmassenstrom mittels eines durch Gehäuseteile der thermischen Energiemaschine entsprechend ausgestalteten Diffusoraustrittsbereichs abströmen kann, und bei welcher der Diffusoraustrittsbereich radial in zu den Silo-Brennkammern führenden Zuströmkanäle hinein mündet, wobei der Diffusoraustrittsbereich derart ausgestaltet ist, dass der aus dem Diffusor austretende Luftmassenstrom unsymmetrisch abströmt, um den Zuströmkanälen der Silo-Brennkammern homogener zugeleitet zu werden.

Dadurch, dass der Diffusoraustrittsbereich derart ausgestaltet ist, dass der aus dem Diffusor austretende Luftmassenstrom unsymmetrisch in die Zuströmkanäle abströmt, um den Zuströmkanälen der Silo-Brennkammern homogener zugeleitet zu werden, können Strömungsverluste bezüglich des Luftmassenstroms erheblich reduziert werden, so dass auch die thermische Energiemaschine insgesamt effektiver betrieben werden kann.

Es kann also gesagt werden, dass vorliegend verfolgt wird, dass der aus dem Diffusor austretende Luftmassenstrom gezielt unsymmetrisch abströmt, um den Zuströmkanälen der Silo-Brennkammern homogener zugeleitet werden zu können.

Hierbei wird die Abströmung des Diffusors durch entsprechende konstruktive Maßnahmen stromab des Diffusors derart verändert, dass der Luftmassenstrom bzw. die diesbezügliche verdichtete Verbrennungsluft eine Vorzugsrichtung in Richtung der Zuströmkanäle der Silo-Brennkammern erhält. Dies betrifft insbesondere diejenigen Teile des Luftmassenstroms, deren Hauptströmungsrichtung von der durch die Zuströmkanäle vorgegebenen Hauptströmungsrichtung verschieden ist.

Bisher strömt der von dem Diffusor kommende Luftmassenstrom radialsymmetrisch ab, dass heißt er strömt in Umfangsrichtung des Diffusors gleichmäßig und konzentrisch um die Maschinenlängsmittelachse herum gleichmäßig verteilt aus dem Diffusor heraus, bis Teile des Luftmassenstroms entweder ungehindert in die Zuströmkanäle bzw. in die Öffnungen der Zuströmkanäle strömen oder gegen das Innengehäuse prallen und von dort dann irgendwie weiter in die Zuströmkanäle gelangen.

Es versteht sich, dass diese vorgenommenen konstruktiven Maßnahmen unterschiedlich sein können, um den von dem Diffusor kommenden Luftmassenstrom im Sinne der Erfindung zielgerichteter den Zuströmkanälen zuzuführen.

So können beispielsweise ein einzelnes oder mehrere von Bauteilen, welche ein dem Diffusor nachgeschaltetes Plenum bzw. den Diffusoraustrittsbereich ausbilden, derart ausgestaltet sein, dass der aus dem Diffusor austretende Luftmassenstrom unsymmetrisch abströmt, um den Zuströmkanälen der Silo-Brennkammern homogener zugeleitet zu werden.

Derartige Bauteile, welche das Plenum bzw. den Diffusoraustrittsbereich begrenzen können, umfassen beispielsweise ein Innengehäuse, ein Mittelgehäuse, einen Diffusoraustritt, einen Silo-Brennkammereintritt bzw. einen Silo-Brennkammerzuführbereich oder dergleichen von der thermischen Energiemaschine.

Die Begrifflichkeit "stromab" des Diffusors beschreibt hierbei einen Bereich, welcher in Strömungsrichtung gesehen hinter dem Diffusor liegt.

Der Begriff "thermische Energiemaschine" betrifft im Sinne der Erfindung im Wesentlichen eine Turbine und insbesondere auch eine Gasturbine. Insofern werden die Begriffe "thermische Energiemaschine" und "Turbine" vorliegend synonym verwendet.

Kumulativ oder alternativ ist es vorteilhaft, wenn stromab des Diffusors innerhalb des Gehäuseteils wenigstens eine Abströmeinrichtung angeordnet ist, welche derart ausgestaltet ist, dass der aus dem Diffusor austretende Luftmassenstrom unsymmetrisch abströmt, um den Zuströmkanälen Silo-Brennkammern homogener zugeleitet zu werden. Durch eine derartige Abströmeinrichtung kann eine thermische Energiemaschine im Sinne der Erfindung entsprechend modifiziert werden, ohne dass hierbei Gehäuseteile oder dergleichen der thermischen Energiemaschine signifikant geändert werden müssen. So können diese Abströmeinrichtungen gegebenenfalls auch nachgerüstet werden.

Teile des Luftmassenstroms können bereits eine vorteilhafte Strömungsrichtungsänderung erfahren, wenn der aus dem Diffusor austretende Luftmassenstrom unsymmetrisch abströmt, bevor er radial an eine Gehäuseteilwandung prallt. Bevorzugt prallen Teile des Luftmassenstroms mit einem spitzeren Winkel als bisher beispielsweise auf ein Innengehäuse, so dass der Luftmassenstrom insgesamt im Diffusoraustrittsbereich weniger stark verwirbelt und den Zuströmkanälen effektiver zugeführt werden kann.

Ist der Diffusoraustrittsbereich oder wenigstens eine stromab des Diffusors innerhalb des Gehäuseteils angeordnete Abströmeinrichtung in Umfangsrichtung des Diffusors unsymmetrisch ausgestaltet, kann der Luftmassenstrom in seiner Gesamtheit effektiver in die Zuströmkanäle geführt werden.

Der von dem Diffusor kommende Luftmassenstrom kann besonders gut zu den Zuströmkanälen geführt werden, wenn der Diffusoraustrittsbereich oder wenigstens eine stromab des Diffusors innerhalb des Gehäuseteils angeordnete Abströmeinrichtung bezogen auf eine durch die Maschinenlängsmittelachse formulierte Mittelebene zwei sich von der Mittelebene radial nach außen erstreckende Abströmflächen aufweist, welche auf oder an der Mittelebene den geringsten Abstand zu der Maschinenlängsmittelachse aufweisen.

Vorliegend verläuft diese Mittelebene bevorzugt senkrecht zu einer durch die Längserstreckung der Silo-Brennkammereinrichtungen definierten Längsachse dieser Silo-Brennkammereinrichtungen.

Insbesondere die von dem Diffusor kommenden Teile des Luftmassenstroms, welche nicht direkt in Richtung von Öffnungen der Zuströmkanäle strömen, können eine im Sinne der Erfindung vorteilhafte Strömungsrichtungsänderung erfahren, wenn die zwei Abströmflächen zumindest teilweise um die Maschinenlängsmittelachse herum gekrümmt sind.

Insofern besitzen die zwei Abströmflächen bezogen auf die Maschinenlängsmittelachse jeweils einen geeignet gewählten Radius, welcher eine entsprechende Krümmung der jeweiligen Abströmfläche bedingt.

In diesem Zusammenhang ist es auch vorteilhaft, wenn die zwei Abströmflächen konkav ausgebildet der Maschinenlängsmittelachse zugewandt sind, wodurch Teile des Luftmassenstroms gezielter nach weiter radial außen in Richtung der Öffnungen bzw. Mündungen der Zuströmkanäle umgelenkt werden können.

Zweckmäßig ist es auch, wenn sich die zwei Abströmflächen ausgehend von der Mittelebene mit einer veränderlichen Krümmung radial nach weiter außen erstrecken. Hierdurch kann eine besonders zielgerichtete Strömungsumlenkung für die betroffenen Teile des Luftmassenstroms erzielt werden.

Ferner ist es vorteilhaft, wenn die zwei Abströmflächen in einem Bereich an Ihrer der Mittelebene zugewandten Seite stärker gekrümmt ausgebildet sind als in einem Bereich an ihrer der Mittelebene abgewandten Seite. Hierdurch können die umgelenkten Teile noch besser bis in die Zuströmkanäle hinein entlang der Abströmflächen geleitet werden.

Der von dem Diffusor kommende Luftmassenstrom kann hierbei besonders gleichmäßig auf die zwei sich gegenüberliegenden, radial weiter außen angeordneten Silo-Brennkammern verteilt werden, wenn die zwei Abströmflächen bezogen auf die Maschinenlängsmittelachse den gleichen Radiusverlauf aufweisen.

Vorzugsweise bleibt die durch den Diffusor erzielbare statische Druckerhöhung trotz des vorliegend modifizierten Diffusoraustrittsbereichs unbeeinträchtigt.

Vorteilhafterweise kann an der erfindungsgemäßen thermischen Energiemaschine durch den bereits vorgerichteten Luftmassenstrom eine wesentlich homogenere Zuströmung zu den Silo-Brennkammern erzielt werden. Auch Schieflasten bei der Verbrennung in den Silo-Brennkammern können vorteilhaft reduziert werden, wenn die den Silo-Brennkammern zugewiesenen Teile des Luftmassenstroms jeweils bereits entsprechend mit einer gewissen vorgerichteten Strömung in die Zuströmkanäle strömen.

Weitere Merkmale, Effekte und Vorteile vorliegender Erfindung werden anhand anliegender Zeichnung und nachfolgender Beschreibung erläutert, in welchen als thermische Energiemaschine beispielhaft eine Turbine mit einem derart ausgestalteten Diffusoraustrittsbereich, dass der aus dem Diffusor austretende Luftmassenstrom unsymmetrisch abströmt, dargestellt und beschrieben ist.

In der Zeichnung zeigen:
- Figur 1: schematisch einen Querschnitt durch einen Diffusoraustrittsbereich einer Gasturbine; und
- Figur 2: schematisch eine stark vereinfachte Längsschnittansicht des Diffusoraustrittsbereichs aus der Figur 1.

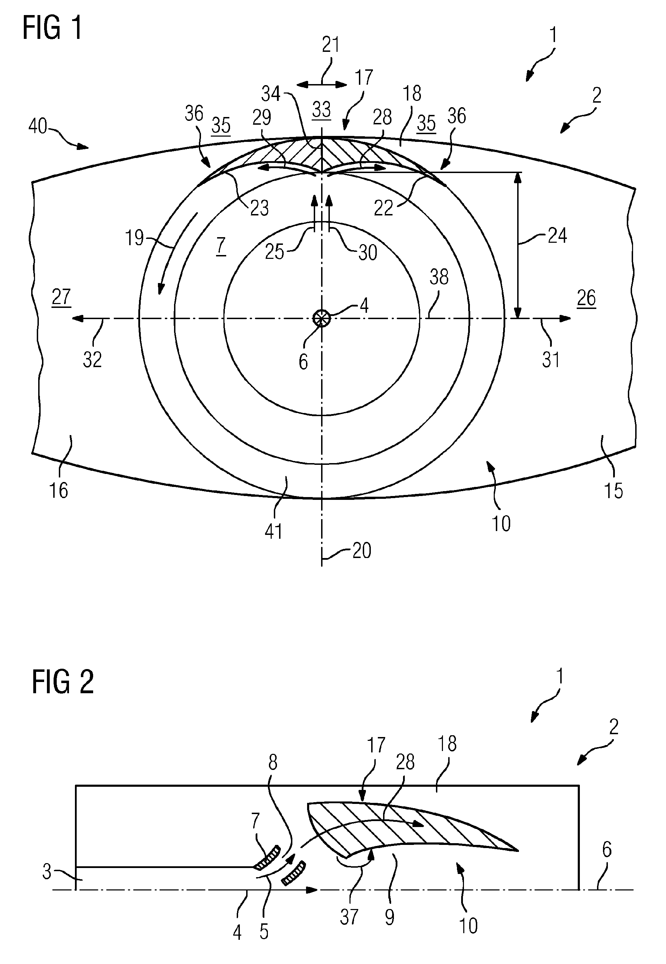

Die in den Figuren 1 und 2 zumindest teilweise gezeigte Turbine 1 ist eine Gasturbine 2.

Die Turbine 1 umfasst hierbei unter anderem einen Verdichter 3 (siehe Figur 2) zum Verdichten eines in axialer Strömungsrichtung 4 strömenden Luftmassenstroms 5 (nur exemplarisch beziffert).

Der Verdichter 3 ist hierbei konzentrisch um die Turbinenlängsmittelachse 6, welche sogleich die Maschineachse formuliert, hierum angeordnet.

Stromab des Verdichters 3, also in Strömungsrichtung 4 gesehen hinter dem Verdichter 3, ist axial nachgeschaltet ein Diffusor 7 angeordnet, wobei der Diffusor 7 einen konzentrisch um die Turbinenlängsmittelachse 6 herum ausgebildeten Diffusoraustritt 8 aufweist, aus welchem der Luftmassenstrom 5 entsprechend entschleunigt in einen Diffusoraustrittsbereich 9 gelangt.

Dieser Diffusoraustrittsbereich 9 ist insbesondere durch ein Innengehäuse 10 der Turbine 1 begrenzt und mündet letztendlich in zwei seitlich an das Innengehäuse 10 angeflanschte Zuströmkanäle 15 und 16, welche wiederum zu zwei sich gegenüberliegenden, radial weiter außen angeordneten Silo-Brennkammern (nicht gezeigt) von zwei Silo-Brennkammereinrichtungen (ebenfalls nicht gezeigt) der Turbine 1 führen.

In diese zwei Silo-Brennkammereinrichtungen wird der von dem Diffusor 7 kommende Luftmassenstrom 5 geleitet, wobei der Diffusoraustrittsbereich 9 erfindungsgemäß derart ausgestaltet ist, dass der aus dem Diffusor 7 austretende Luftmassenstrom 5 gezielt unsymmetrisch abströmt, um den Zuströmkanälen 15 und 16 der Silo-Brennkammern homogener zugeleitet zu werden.

Ein solches unsymmetrisches Abströmen des Luftmassenstroms 5 nach dem Diffusor 7 bzw. aus dem Diffusoraustritt 8 heraus gelingt in diesem Ausführungsbeispiel besonders gut durch eine entsprechend ausgestaltete Abströmeinrichtung 17.

Speziell wird vorliegend der aus dem Diffusor 7 austretende Luftmassenstrom 5 unsymmetrisch abströmt, bevor der Luftmassenstrom 5 radial stumpf an eine Gehäuseteilwandung 18 prallt.

Hierbei ist der Diffusoraustrittsbereich 9 bzw. die stromab des Diffusors 7 angeordnete Abströmeinrichtung 17 in Umfangsrichtung 19 des Diffusors 7 unsymmetrisch ausgestaltet ist.

Die Abströmeinrichtung 17 weist - bezogen auf eine durch die Turbinenlängsmittelachse 6 formulierte Mittelebene 20 - zwei sich von dieser Mittelebene 20 in radialer Richtung 21 radial nach außen erstreckende Abströmflächen 22 und 23 auf, welche im Bereich bzw. in der Mittelebene 20 den geringsten Abstand 24 zu der Turbinenlängsmittelachse 6 aufweisen.

Die Abstandsflächen 22 und 23 sind konkav und im Wesentlichen um die Turbinenlängsmittelachse 6 herum gekrümmt ausgestaltet.

Diese Abströmflächen 22 und 23 gestalten den Diffusoraustrittsbereich 9 zumindest teilweise derart aus, dass zumindest Teile 25 (nur beispielhaft eingezeichnet und beziffert) des Luftmassenstroms 5 vorteilhafter umgelenkt und hierbei vorteilhafter in die Mündungen 26 bzw. 27 der Zuströmkanäle 15 und 16 geführt werden, wodurch der aus dem Diffusor 7 austretende Luftmassenstrom 5 insgesamt homogener den Zuströmkanälen 15 und 16 zugeleitet werden kann.

Konkret bedeutet dies, dass die Abströmung des Diffusors 7 durch entsprechende konstruktive Maßnahmen, nämlich durch die Abströmeinrichtung 17, stromab des Diffusors 7 derart verändert ist, dass der Luftmassenstrom 5 mit Vorzugsrichtungen 28 bzw. 29 auf die Zuströmkanäle 15 bzw. 16 der Silo-Brennkammern zu umgelenkt wird. Dies betrifft insbesondere diejenigen Teile 25 des Luftmassenstroms 5, deren Hauptströmungsrichtung 30 von der durch die Zuströmkanäle 15 bzw. 16 vorgegebenen Kanalhauptströmungsrichtung 31 bzw. 32 verschieden ist.

Besonders gut gelingt dies, da die zwei Abströmflächen 22 bzw. 23 ausgehend von der Mittelebene 20 mit einer veränderlichen Krümmung in radialer Richtung 21 radial nach weiter außen erstrecken.

Insbesondere sind die zwei Abströmflächen 22 und 23 in einem Bereich 33 an Ihrer der Mittelebene 20 zugewandten Seite 34 stärker gekrümmt ausgebildet als in einem weiteren Bereich 35 an Ihrer der Mittelebene 20 abgewandten Seite 36.

Die Abströmeinrichtung 17 ist hierbei derart platziert, dass eine Hinterströmung 37 der Abströmeinrichtung 17 durch einen anderen Teil des Luftmassenstroms 5 ermöglicht ist, wodurch eine Kühlung von hier nicht gezeigten Bauteilen etwa des Innengehäuses 10 gewährleistet ist.

Insofern ist es besonders vorteilhaft, wenn die Abströmeinrichtung 17 beabstandet insbesondere von der Gehäuseteilwand 18 innerhalb des Diffusoraustrittsbereichs 8 angeordnet ist.

An dieser Stelle sei noch erwähnt, dass die Mittelebene 20 senkrecht zu einer durch die Längserstreckung der Silo-Brennkammereinrichtungen definierten Längsachse 38 dieser Silo-Brennkammereinrichtungen verläuft.

In diesem Ausführungsbeispiel ist lediglich eine einzige Abströmeinrichtung 17 dargestellt, welche mittig zwischen den beiden Zuströmkanälen 15 und 16 in einem ersten mittigen Zwischenbereich 40 platziert ist.

Es versteht sich, dass eine weitere derartige Abströmeinrichtung 17 auch in einem weiteren mittigen Zwischenbereich 41 angeordnet sein kann.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Thermische Energiemaschine (1), insbesondere Gasturbine (2), mit einem Verdichter (3) zum Verdichten eines entlang der Maschinenlängsmittelmittelachse (6) in axialer Strömungsrichtung (4) strömenden Luftmassenstroms (5),
mit einem diesem Verdichter (3) axial nachgeschalteten Diffusor (7) und mit zwei sich gegenüberliegenden, radial weiter außen angeordneten Silo-Brennkammern, in welche hinein der aus dem Diffusor (7) austretende Luftmassenstrom (5) mittels eines durch Gehäuseteile (10) der thermischen Energiemaschine (1) entsprechend ausgestalteten Diffusoraustrittsbereichs (9) abströmen kann, und bei welcher der Diffusoraustrittsbereich (9) radial in zu den Silo-Brennkammern führenden Zuströmkanäle (15, 16) hinein mündet, wobei der Diffusoraustrittsbereich (9) derart ausgestaltet ist, dass der aus dem Diffusor (7) austretende Luftmassenstrom (5) unsymmetrisch abströmt, um den Zuströmkanälen (15, 16) der Silo-Brennkammern homogener zugeleitet zu werden.

2. Thermische Energiemaschine (1) nach Anspruch 1,
wobei stromab des Diffusors (7) innerhalb des Gehäuseteils (10) wenigstens eine Abströmeinrichtung (17) angeordnet ist, welche derart ausgestaltet ist, dass der aus dem Diffusor (7) austretende Luftmassenstrom (5) unsymmetrisch abströmt, um den Zuströmkanälen (15, 16) der Silo-Brennkammern homogener zugeleitet zu werden.

3. Thermische Energiemaschine (1) nach Anspruch 1 oder 2,
wobei der aus dem Diffusor (7) austretende Luftmassenstrom (5) unsymmetrisch abströmt, bevor er radial an eine Gehäuseteilwandung (18) prallt.

4. Thermische Energiemaschine (1) nach einem der Ansprüche 1 bis 3,
wobei der Diffusoraustrittsbereich (9) oder wenigstens eine stromab des Diffusors (7) innerhalb des Gehäuseteils (10) angeordnete Abströmeinrichtung (17) in Umfangsrichtung (19) des Diffusors (7) unsymmetrisch ausgestaltet ist.

5. Thermische Energiemaschine (1) nach einem der Ansprüche 1 bis 4,
wobei der Diffusoraustrittsbereich (9) oder wenigstens eine stromab des Diffusors (7) innerhalb des Gehäuseteils (10) angeordnete Abströmeinrichtung (17) bezogen auf eine durch die Maschinenlängsmittelachse (6) formulierte Mittelebene (20) zwei sich von der Mittelebene (20) radial nach außen erstreckende Abströmflächen (22, 23) aufweist, welche auf oder an der Mittelebene (20) den geringsten Abstand (24) zu der Maschinenlängsmittelachse (6) aufweisen.

6. Thermische Energiemaschine (1) nach Anspruch 5,
wobei die zwei Abströmflächen (22, 23) zumindest teilweise um die Maschinenlängsmittelachse (6) herum gekrümmt sind.

7. Thermische Energiemaschine (1) nach Anspruch 5 oder 6,
wobei die zwei Abströmflächen (22, 23) konkav ausgebildet der Maschinenlängsmittelachse (6) zugewandt sind.

8. Thermische Energiemaschine (1) nach einem der Ansprüche 5 bis 7,
wobei sich die zwei Abströmflächen (22, 23) ausgehend von der Mittelebene (20) mit einer veränderlichen Krümmung radial nach weiter außen erstrecken.

9. Thermische Energiemaschine (1) nach einem der Ansprüche 5 bis 8,
wobei die zwei Abströmflächen (22, 23) in einem Bereich (33) an Ihrer der Mittelebene (20) zugewandten Seite (34) stärker gekrümmt ausgebildet sind als in einem weiteren Bereich (35) an Ihrer der Mittelebene (20) abgewandten Seite (36).

10. Thermische Energiemaschine (1) nach einem der Ansprüche 5 bis 9,
wobei die zwei (22, 23) Abströmflächen (22, 23) bezogen auf die Maschinenlängsmittelachse (6) den gleichen Radiusverlauf aufweisen.
